# FASCICULE DE BREVET EUROPEEN

(11) **EP 2 363 813 B1**
(45) Date de publication et mention de la délivrance du brevet: **24.06.2020**
(21) Numéro de dépôt: 11305220.3
(22) Date de dépôt: 01.03.2011
(51) Int. Cl.: G06F 15/80

(54) **Puce électronique et circuit intégré comportant une telle puce électronique**
Chip und integrierte Schaltung mit einem solchen Chip
Chip and integrated circuit comprising such a chip

(30) Priorité: 02.03.2010 FR 1051517
(43) Date de publication de la demande: 07.09.2011
(73) Titulaire: Commissariat à l'énergie atomique et aux énergies alternatives, 75015 Paris (FR)
(72) Inventeur: Lafi, Walid, 38400, Saint-Martin d'Hères (FR); Lattard, Didier, 38680, Rencurel (FR)
(74) Mandataire: Bonnet, Michel

(56) Documents cités:
- FEIHUI LI ET AL: "Design and Management of 3D Chip Multiprocessors Using Network-in-Memory", COMPUTER ARCHITECTURE, 2006. 33RD INTERNATIONAL SYMPOSIUM ON BOSTON, MA, USA 17-21 JUNE 2006, PISCATAWAY, NJ, USA,IEEE LNKD- DOI:10.1109/ISCA.2006.18, 17 juin 2006 (2006-06-17), pages 130-141, XP010925387, ISBN: 978-0-7695-2608-9
- PAVLIDIS V F ET AL: "3-D Topologies for Networks-on-Chip", IEEE TRANSACTIONS ON VERY LARGE SCALE INTEGRATION (VLSI) SYSTEMS, IEEE SERVICE CENTER, PISCATAWAY, NJ, US LNKD- DOI:10.1109/TVLSI.2007.893649, vol. 15, no. 10, 1 octobre 2007 (2007-10-01), pages 1081-1090, XP011192099, ISSN: 1063-8210
- Jun Ho Bahn ET AL: "ON DESIGN AND APPLICATION MAPPING OF A NETWORK-ON-CHIP(NOC) ARCHITECTURE", Parallel Processing Letters, vol. 18, no. 02, 1 June 2008 (2008-06-01), pages 239-255, XP055563401, ISSN: 0129-6264, DOI: 10.1142/S0129626408003363

## Description

La présente invention concerne une puce électronique et un circuit intégré comportant une telle puce électronique. Elle s'applique en particulier au domaine des microprocesseurs.

Les définitions suivantes seront utilisées dans la description et les revendications qui vont suivre.

Une « puce électronique » (appelée « chip » en anglais) est un petit élément de matériau semi-conducteur dans lequel un circuit électronique donné est conçu. Une puce électronique peut être faite d'un seul bloc de matériau semi-conducteur, ou bien de plusieurs. Dans ce dernier cas, les blocs sont généralement empilés les uns sur les autres afin de former plusieurs couches de la puce électronique.

Un « circuit intégré » est une puce électronique qui a été encapsulée dans un boîtier muni de broches de connexions permettant, lorsque connectées à un circuit de composants électroniques, par exemple sur une carte de circuit imprimé, de connecter la puce électronique à ces autres composants.

L'article intitulé « MIRA : A multi-layered on-chip interconnect router architecture », de D. Park et al, publié dans 35th International Symposium on Computer Architecture, 2008, ISCA '08, juin 2008, décrit une puce électronique comportant des modules fonctionnels comprenant chacun une unique unité de traitement.

Dans cet article, la puce électronique est en trois dimensions et comporte plusieurs couches superposées de modules fonctionnels (les couches seront appelées « plans » par la suite, lorsque l'on considérera les modules fonctionnels d'un point de vue réseau). Il est proposé dans ce document que les unités de traitement de modules fonctionnels de couches différentes situés à la verticale les uns des autres, soient toutes connectées à un unique routeur commun. Il est en outre proposé que les éléments de ce routeur commun soient répartis sur les différentes couches. Cette architecture présente l'inconvénient de ne pas être réalisable en pratique avec les technologies actuelles d'intégration de puce électronique en trois dimensions.

Par ailleurs, l'article intitulé « Design and management of 3D chip multiprocessors using network-in-memory », de F. Li et al, publié dans Proceedings of ISCA-33, juin 2006, décrit une puce électronique comportant des modules fonctionnels comprenant chacun une unique unité de traitement et une unique unité de routage connectées l'une à l'autre, les unités de routage des modules fonctionnels étant connectées entre elles de manière à permettre un routage de données entre les unités de traitement des modules fonctionnels.

Dans cet article, la puce électronique est en trois dimensions et comporte plusieurs couches superposées de modules fonctionnels. L'unité de routage de chaque module fonctionnel comprend un unique routeur pour la communication dans la couche. En outre, la puce électronique comprend plusieurs bus de données verticaux, chaque bus de données reliant entre eux les routeurs de couches différentes situés à la verticale les uns des autres. Les routeurs présentent donc six connexions bidirectionnelles (quatre connexions vers d'autres routeurs dans le même plan, une connexion vers l'unité de traitement et une connexion vers le bus de données vertical) au lieu des sept connexions qui auraient été nécessaires en l'absence du bus de données. Cependant, cette architecture présente l'inconvénient qu'un bus de données ne peut être parcouru que par un seul groupe de données à la fois. Ainsi, en cas de nombreux échanges de données entre les couches, les bus de données verticaux saturent facilement.

Par ailleurs, l'article intitulé « A novel dimensionally-decomposed router for on-chip communication in 3D architectures », de J. Kim et al, publié dans ACM SIGARCH Computer architecture news, vol. 35, pages 138-149, mai 2007, décrit une puce électronique comportant des modules fonctionnels comprenant chacun une unique unité de traitement et une unique unité de routage connectées l'une à l'autre, les unités de routage des modules fonctionnels étant connectées entre elles de manière à permettre un routage de données entre les unités de traitement des modules fonctionnels.

Dans cet article, la puce électronique est en trois dimensions et comporte plusieurs couches superposées de modules fonctionnels. Le réseau de modules fonctionnels ainsi constitué est un réseau en treillis en trois dimensions, dans lequel chaque module fonctionnel est connecté à au plus quatre modules fonctionnels voisins dans sa couche, ainsi que, le cas échéant, à un module fonctionnel voisin situé dans la couche du dessus et un module fonctionnel voisin situé dans la couche du dessous. Les quatre modules fonctionnels voisins dans le plan sont traditionnellement qualifiés de Nord, Sud, Est et Ouest et les deux modules fonctionnels au dessus et en dessous de Haut et Bas, suivant leur position par rapport au module fonctionnel considéré.

Dans cet article, l'unité de routage de chaque module fonctionnel est constituée d'un unique routeur comportant trois commutateurs croisés (« crossbar » en anglais), au lieu d'un seul commutateur croisé pour un routeur habituel. Le premier commutateur croisé est dédié au routage Est / Ouest, le second commutateur croisé au routage Nord / Sud, et le troisième commutateur croisé au routage Haut / Bas. Cette division entre plusieurs commutateurs croisés a pour but d'augmenter la performance du routeur et de diminuer sa surface. Cet article propose en outre d'utiliser l'algorithme de routage déterministe XYZ, qui présente l'avantage de ne nécessiter que deux étapes d'arbitrage. Si un autre algorithme de routage était utilisé, il pourrait nécessiter plus d'étapes d'arbitrage à cause de la présence des trois commutateurs croisés. Or, un nombre d'étapes d'arbitrage supérieur à deux pourrait diminuer, voire annuler, le gain de performance obtenu par l'utilisation de trois commutateurs croisés. Ainsi, la puce électronique proposée dans cet article présente l'inconvénient de ne garantir de bonnes performances qu'avec un seul algorithme de routage.

Par ailleurs, l'article intitulé « 3-D topologies for networks-on-chip », de V. Pavlidis et al, publié dans IEEE Transactions on Very Large Scale Integration Systems, vol. 15, No. 10, 1er octobre 2007, pages 1081-1090, décrit une puce électronique comportant des modules fonctionnels comprenant chacun une unité de traitement et une unité de routage connectées l'une à l'autre, les unités de routage des modules fonctionnels étant connectées entre elles de manière à permettre un routage de données entre les unités de traitement des modules fonctionnels.

Par ailleurs, l'article intitulé « On design and application mapping of a network-on-chip (NOC) architecture », de J. H. Bahn et al, publié dans Parallel Processing Letters, vol. 18, No. 2, 1er juin 2008, pages 239-255, décrit une puce électronique selon le préambule de la revendication 1.

Il peut ainsi être souhaité de prévoir une puce électronique qui permette de s'affranchir d'au moins une partie des problèmes et contraintes précités.

L'invention a donc pour objet une puce électronique selon la revendication 1.

L'invention propose ainsi de concevoir l'unité de routage avec plusieurs routeurs de petites tailles, c'est-à-dire à partir de plusieurs routeurs comportant individuellement un nombre de connexions inférieur au nombre de connexions de l'unité de routage. Ainsi, lorsque des données sont acheminées au travers de l'unité de routage dédoublée entre deux connexions de routage sans changement de couche reliées au routeur de premier niveau, ces données ne traversent que le routeur de premier niveau. Or, traitement de ce module fonctionnel et relié à au moins une autre connexion de routage.

L'invention propose ainsi de concevoir l'unité de routage avec plusieurs routeurs de petites tailles, c'est-à-dire à partir de plusieurs routeurs comportant individuellement un nombre de connexions inférieur au nombre de connexions de l'unité de routage. Ainsi, lorsque des données sont acheminées au travers de l'unité de routage dédoublée entre deux connexions de routage reliées au routeur de premier niveau, ces données ne traversent que le routeur de premier niveau. Or, comme ce routeur de premier niveau est de petite taille, ces données peuvent traverser l'unité de routage dédoublée avec un débit élevé et une latence faible.

De façon optionnelle, la puce électronique comporte plusieurs modules fonctionnels ayant chacun une unité de routage dédoublée.

De façon optionnelle également, les routeurs de premier niveau forment au moins un réseau, appelé réseau de premier niveau, dans lequel les routeurs de premier niveau sont connectés entre eux.

De façon optionnelle également, les routeurs de premier niveau forment plusieurs réseaux de premier niveau et la puce électronique comporte au moins une paire d'unités de routage dédoublées dont les routeurs de premier niveau appartiennent à des réseaux de premier niveau différents et dont les routeurs de second niveau respectifs sont connectés l'un à l'autre.

De façon optionnelle également, les routeurs de second niveau forment au moins un réseau, appelé réseau de second niveau, dans lequel les routeurs de second niveau sont connectés entre eux.

Conformément à l'invention, la puce électronique comporte plusieurs couches de modules fonctionnels.

De façon optionnelle également, chaque couche comporte un réseau de premier niveau distinct.

De façon optionnelle également, la puce électronique comporte au moins une paire d'unités de routage dédoublées dont les routeurs de premier niveau appartiennent à des réseaux de premier niveau de couches différentes et dont les routeurs de second niveau respectifs sont connectés l'un à l'autre.

De façon optionnelle également, chaque réseau de premier niveau est un réseau en treillis. Dans ce cas, plusieurs modules fonctionnels peuvent présenter une unité de routage dédoublée et ont leur routeur de premier niveau uniquement connecté à leur routeur de second niveau et aux quatre routeurs de premier niveau de quatre modules fonctionnels voisins dans leur couche, et leur routeur de second niveau uniquement connecté à leur routeur de premier niveau, à leur unité de traitement, et aux deux routeurs de second niveau de deux modules fonctionnels voisins, respectivement, de la couche supérieure et de la couche inférieure à leur couche.

Ainsi, dans une puce électronique tridimensionnelle selon l'invention, les routeurs de premier niveau sont dédiés aux transmissions intra couches et les routeurs de second niveau aux transmissions inter couches et à l'acheminement final des données aux unités de traitement.

L'invention a également pour objet un circuit intégré comportant un boîtier, une puce électronique telle que définie précédemment fixée dans le boîtier, et des broches de connexion traversant le boîtier et connectées à la puce électronique.

L'invention sera mieux comprise à l'aide de la description qui va suivre, donnée uniquement à titre d'exemple et faite en se référant aux dessins annexés dans lesquels :
- la figure 1 est un schéma représentant un circuit intégré selon un mode de réalisation de l'invention,
- la figure 2 est une vue en perspective éclatée d'une partie d'une puce électronique du circuit intégré de la figure 1,
- la figure 3 est un schéma représentant des modules fonctionnels de la puce électronique de la figure 2 connectés entre eux, et
- la figure 4 est un schéma représentant une unité de routage d'un module fonctionnel de la figure 2.

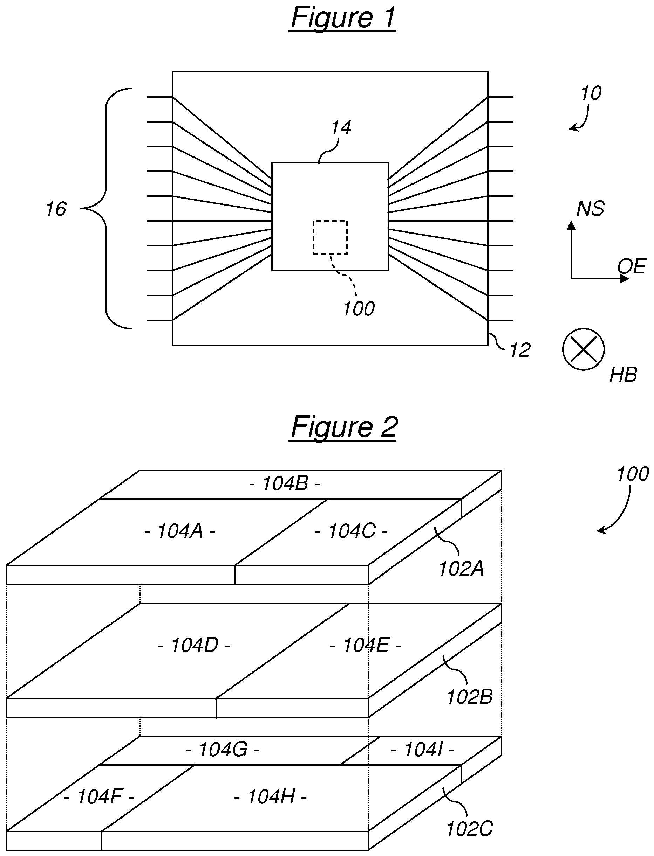

En référence à la figure 1, un circuit intégré 10 selon l'invention comporte un boîtier 12 et une puce électronique 14 fixée dans le boîtier 12. Comme expliqué plus haut, la puce électronique est un petit élément de matériau semi-conducteur dans lequel un circuit électronique donné est conçu. Dans l'exemple décrit, le circuit électronique est conçu sous la forme d'un réseau sur puce (de l'anglais « Network on Chip »), de sorte que la puce électronique 14 comporte des modules fonctionnels échangeant des données les uns avec les autres comme les nœuds d'un réseau. En outre, dans l'exemple décrit, la puce électronique 14 comporte plusieurs couches (trois dans l'exemple décrit) de modules fonctionnels empilées les unes sur les autres dans une direction appelée traditionnellement Haut / Bas HB. Les modules fonctionnels de chaque couche sont positionnés les uns relativement aux autres par rapport à deux directions perpendiculaires, appelées généralement Nord / Sud NS et Ouest / Est OE.

Le circuit intégré 10 comporte en outre des broches de connexion 16 traversant le boîtier 12 et connectées à la puce électronique 14. Les broches de connexion sont destinées à être reliées à une carte de circuit imprimé (non représentée) afin de connecter le circuit intégré 10 à cette dernière.

Une partie 100 de la puce électronique 14 va à présent être détaillée.

En référence à la figure 2, les trois couches de la puce électronique telles qu'elles se présentent dans la partie 100 sont représentées séparées les unes des autres. Ces trois couches sont référencées respectivement 102A, 102B, 102C et comprennent, dans la partie 100, neuf modules fonctionnels 104A - 104I.

Plus précisément, la première couche 102A (la couche la plus haute dans la direction HB) comporte les trois modules fonctionnels 104A, 104B et 104C, la seconde couche 102B comporte les deux modules fonctionnels 104D et 104E, et la troisième couche (la couche la plus basse dans la direction HB) comporte les quatre modules fonctionnels 104F, 104G, 104H et 104I.

Afin d'échanger des données, la puce électronique comporte des connexions, appelées connexions de routage, connectant les modules fonctionnels 104A - 104I entre eux, comme cela sera expliqué par la suite, ainsi qu'aux broches de la puce électronique. En particulier, chaque module fonctionnel 104A - 104I est connecté avec d'autres modules fonctionnels, de préférence et comme cela est le cas dans l'exemple décrit, avec des modules fonctionnels voisins. Les modules fonctionnels voisins d'un module fonctionnel donné sont les modules fonctionnels en contact avec lui, situés soit dans la même couche soit dans une couche adjacente. Les modules fonctionnels seront qualifiés de Nord, Sud, Est, Ouest, Haut ou bas, en fonction de leur position par rapport au module fonctionnel donné. Dans l'exemple décrit, les modules fonctionnels ne comportent chacun qu'au plus un seul voisin dans chaque direction Nord, Sud, Est, Ouest, Haut et bas.

Ainsi, dans l'exemple décrit, le module fonctionnel 104A de la première couche 102A comporte, dans la partie 100, le module fonctionnel 104B comme voisin Nord, le module 104C comme voisin Est et le module 104D comme voisin Bas. Toujours dans l'exemple décrit, le module fonctionnel 104H comporte, dans la partie 100, le module 104I comme voisin Nord, le module 104F comme voisin Ouest et le module 104E comme voisin Haut.

On va à présent détailler la manière dont les modules fonctionnels sont connectés entre eux.

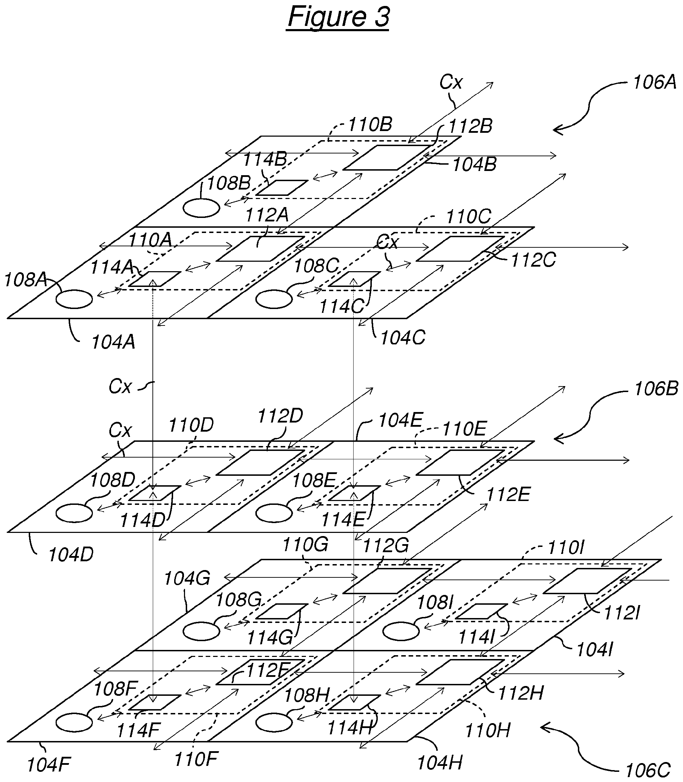

En référence à la figure 3, les modules fonctionnels de chaque plan sont connectés de manière à former un réseau 106A, 106B, 106C de modules fonctionnels. Dans l'exemple illustré, chacun des réseaux 106A, 106B, 106C est un réseau en treillis dans lequel chaque module fonctionnel 104A - 104I peut être connecté jusqu'à quatre modules fonctionnels voisins dans son plan (les modules fonctionnels voisins Nord, Sud, Est ou Ouest). Par ailleurs, au moins une partie des modules fonctionnels de chaque plan sont connectés à leur module fonctionnel voisin Bas et/ou à leur module fonctionnel voisin Haut.

Chaque module fonctionnel 104A - 104I comporte tout d'abord une unique unité de traitement 108A - 108I. Chaque unité de traitement 108A - 108I est conçue pour traiter des données qu'elle reçoit d'autres unités de traitement et/ou pour émettre des données à destination d'autres unités de traitement. Les unités de traitement 108A - 108I sont par exemple de la mémoire ou bien un cœur de processeur.

Chaque module fonctionnel 104A - 104I comporte en outre une unique unité de routage 110A - 110I connectée à son unité de traitement 108A - 108I. Les unités de routage 110A - 110I des modules fonctionnels 104A - 104I sont connectées entre elles par les connexions de routage de manière à permettre un routage de données entre les unités de traitement 108A - 108I. Ainsi, chaque connexion de routage présente une première extrémité reliée à une unité de routage. L'autre extrémité est reliée à une autre unité de routage ou à l'unité de traitement associée à l'unité de routage reliée à sa première extrémité ou à un autre élément vers lequel et/ou à partir duquel les données doivent pouvoir être routées. Cet autre élément est par exemple une des broches de connexion du circuit intégré, ce qui permet à la puce électronique d'émettre et/ou recevoir des données. Les connexions de routage portent la référence Cx dans la figure 3 (où seule une partie des références Cx est reportée par souci de clarté).

Chaque unité de routage 110A - 110I est dite « dédoublée » en ce qu'elle comporte deux routeurs, appelés respectivement routeur de premier niveau ou routeur dans le plan 112A - 112I et routeur de second niveau ou routeur transversal 114A - 114I. Ces routeurs sont conçus pour router les données entre les connexions de routage Cx auxquelles ils sont reliés.

Les routeurs dans le plan 112A - 112I sont conçus pour router les données dans le plan de leur module fonctionnel 104A - 104I. Chaque routeur dans le plan 112A - 112I est ainsi connecté au routeur dans le plan d'une ou plusieurs unités de routage 110A - 110I de modules fonctionnels voisins dans le plan de son module fonctionnel. Ainsi, les routeurs dans le plan de chaque plan forment un réseau, appelé réseau dans le plan ou réseau de premier niveau, dans lequel les routeurs dans le plan sont connectés entre eux. La puce électronique décrite comporte trois réseaux dans le plan. Dans chacun de ces réseaux dans le plan, les données peuvent être routées entre deux routeurs dans le plan quelconques en ne passant que par des routeurs dans le plan. Ainsi, le réseau dans le plan de la première couche 102A comporte les routeurs dans le plan 112A, 112B et 112C. Le réseau dans le plan de la seconde couche 102B comporte les routeurs dans le plan 112D et 112E. Le réseau dans le plan de la troisième couche 102C comporte les routeurs dans le plan 112F, 112G, 112H et 112I.

Les routeurs transversaux 114A - 114I sont conçus pour router les données transversalement au plan de leur module fonctionnel 104A - 104I (c'est-à-dire entre les réseaux 106A, 106B et 106C), ainsi que vers ou en provenance de l'unité de traitement 108A - 108I de leur module fonctionnel 104A - 104I. Chaque routeur transversal 114A - 114I est ainsi tout d'abord connecté au routeur dans le plan 112A - 112I et à l'unité de traitement 108A - 108I de son module fonctionnel 104A - 104I. Chaque routeur transversal 114A - 114I est outre connecté à l'unité de routage 110A - 110I de chacun de son ou de ses modules fonctionnels voisins Haut et/ou Bas, lorsqu'il en a. Dans l'exemple décrit, les deux routeurs transversaux de chacune des paires: 114A et 114D, 114D et 114F, 114C et 114E, 114E et 114H, sont ainsi connectés transversalement ensemble.

On remarquera que la puce électronique 14 comporte des réseaux linéaires de routeurs transversaux, dans chacun desquels les routeurs transversaux sont connectés entre eux, les uns à la suite des autres. Dans chacun de ces réseaux transversaux, les données peuvent être routées entre deux routeurs transversaux quelconques en ne passant que par des routeurs transversaux. En particulier, la partie 100 de la puce électronique 14 décrite comporte deux réseaux transversaux : le premier réseau transversal comportant les trois routeurs transversaux 114A, 114D et 114F, et le second réseau transversal comportant les trois routeurs transversaux 114C, 114E et 114H.

De préférence, les connexions de routage Cx connectant entre eux les routeurs 112A - 112I, 114A - 114I et les unités de traitement 108A - 108I sont des liens de communication, aussi appelés canaux, qui acheminent des données point à point de manière bidirectionnelle. Ces connexions de routage bidirectionnelles Cx sont représentées sur la figure 3 par des flèches à double sens.

De préférence également, les unités de traitements 108A - 108I s'échangent des données sous la forme de messages, tandis que les routeurs 112A - 112I, 114A - 114I sont conçus pour échanger les données par paquets de données (« packet switching »), un paquet de données pouvant contenir une fraction de message, un message entier ou même plusieurs messages. De préférence également, les échanges de paquets de données sont réalisés en mode ver de terre (« Wormhole » en anglais), dans lequel les paquets de données sont divisés en segments (« flit » en anglais, abréviation de « flow control digit »). Ainsi, chaque unité de traitement 108A - 108I transmet à son unité de routage 110A - 110I des paquets de données sous forme de segments, qui sont acheminés via d'autres unités de routages 110A - 110I jusqu'à l'unité de traitement de destination. Cette dernière reconstitue les paquets de données à partir de leurs segments, puis les messages à partir des paquets de données.

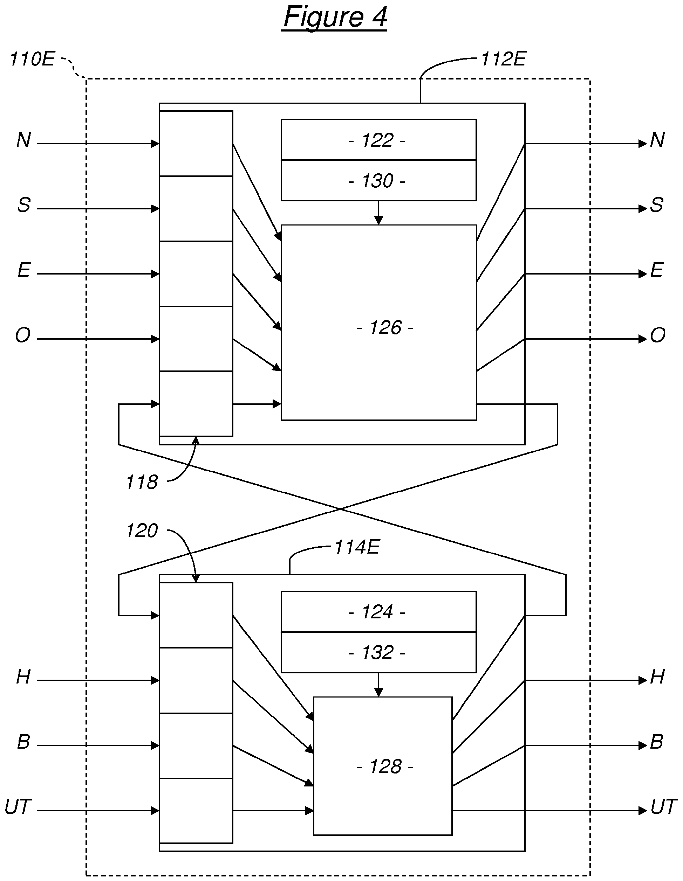

En référence à la figure 4, on va à présent décrire plus en détail les unités de routage dédoublées, en prenant le cas d'une unité de routage connectée à l'unité de traitement correspondante et à des modules fonctionnels voisins dans les six directions possibles (Nord, Sud, Est, Ouest, Haut et Bas, indiquées respectivement par les lettres N, S, E, O, H et B), comme par exemple l'unité de routage 110E de la figure 3. Chaque connexion de routage bidirectionnelle Cx est à présent représentée par un canal entrant et un canal sortant.

Ainsi, le routeur dans le plan 112E est connecté à quatre canaux entrant et quatre canaux sortant pour les quatre directions Nord, Sud, Est et Ouest. Le routeur dans le plan 112E est en outre connecté à un canal sortant et un canal entrant pour échanger avec le routeur transversal 114E.

Le routeur transversal 114E est connecté à un canal entrant et un canal sortant pour échanger avec le routeur dans le plan 112E, à deux canaux entrant et deux sortant pour les directions Haut et Bas, et à un canal entrant et un canal sortant pour l'unité de traitement 108E.

Chacun des deux routeurs 112E, 114E comporte, pour chaque canal entrant, un port d'entrée 118, 120 pour en particulier mettre en tampon les données entrantes.

Chaque routeur 112E, 114E comporte en outre un système de détermination de routage 122, 124 (« Routing Computation » en anglais) pour déterminer le canal de sortie vers lequel router les données mises en tampon dans chaque port d'entrée 118, 120.

Chaque routeur 112E, 114E comporte en outre un commutateur croisé 126, 128 (« crossbar » en anglais) pour connecter sélectivement chaque port d'entrée 118, 120 à chaque canal de sortie. Dans l'exemple décrit, chaque routeur 112E, 114E comporte un unique commutateur croisé 126, 128, dont la taille est donc égale au nombre de canaux d'entrée par le nombre de canaux de sortie. Ainsi, le commutateur croisé 126 du routeur dans le plan 112E est de taille 5x5, tandis que le commutateur croisé 128 du routeur transversal 114E est de taille 4x4.

Chaque routeur 112E, 114E comporte en outre un système d'allocation de commutateur 130, 132 (de l'anglais « Switch Allocator ») pour commander le commutateur croisé 126, 128 afin qu'il connecte le port d'entrée 118, 120 et le canal de sortie déterminé par le système de détermination de routage 122, 124.

On va à présent détailler les avantages de l'invention, à partir de données numériques reprises de l'article « A novel dimensionally-decomposed router for on-chip communication in 3D architectures », de J. Kim et al, publié dans ACM SIGARCH Computer architecture news, vol. 35, pages 138-149, mai 2007.

Si l'unité de routage 110E avait été constituée d'un seul routeur, ce dernier aurait dû être connecté à sept canaux entrant et sept canaux sortant. Il aurait ainsi compris un commutateur croisé de taille 7x7, qui occupe généralement une surface de l'ordre de 17 300 µm² et consomme de l'ordre de 9,4 mW (pour une activité de commutation de 50% à 500MHz). Or, le commutateur croisé d'un routeur de taille 5x5, tel que le routeur dans le plan 112E, occupe une surface de l'ordre de 8 500 µm² et consomme de l'ordre de 4.2 mW (pour une activité de commutation de 50% à 500MHz), tandis que le commutateur croisé d'un routeur de taille 4x4, tel que le routeur transversal 114E, occupe une surface encore plus petite et a une consommation encore moindre. Ainsi, la surface totale des deux routeurs 5x5 et 4x4 est légèrement inférieure à celle d'un routeur unique 7x7. En outre, lorsque les deux routeurs 5x5 et 4x4 sont utilisés en même temps, la consommation électrique est légèrement inférieure à celle d'un routeur unique 7x7. Cependant, comme cela sera expliqué par la suite, un seul des deux routeurs est la plupart du temps utilisé à un moment donné pour router les données au travers de l'unité de routage, de sorte que la consommation électrique moyenne d'une unité de routage dédoublée est nettement inférieure à celle d'une unité de routage à routeur unique.

Les autres unités de routages dédoublées de la puce électronique 14 décrite sont identiques, si ce n'est que le nombre de canaux d'entrée et de sortie peut varier en fonction du nombre de modules fonctionnels voisins.

Il apparaît clairement qu'une puce électronique telle que celle décrite précédemment permet un gain de performance, en particulier un gain en débit et en latence, sans imposer d'algorithme de routage particulier.

En effet, lorsque des données sont acheminées entre les unités de traitement de modules fonctionnels dont les routeurs transversaux appartiennent à un même réseau transversal, ces données ne traversent que des routeurs transversaux. Ainsi, l'utilisation d'unités de routage dédoublées est avantageuse car les routeurs transversaux ont une taille petite, en particulier par rapport à la taille des routeurs uniques que présenteraient des unités de routage non dédoublées.

Lorsque des données sont acheminées entre deux modules fonctionnels dont les routeurs dans le plan appartiennent au même réseau dans le plan, ces données traversent un routeur transversal, puis N routeurs dans le plan (N correspondant au nombre de modules fonctionnels traversés) et enfin à nouveau un routeur transversal. Si les unités de routage ne comprenaient qu'un unique routeur, les données traverseraient N de ces uniques routeurs. Ainsi, dès que N est élevé, l'utilisation d'unités de routage dédoublées devient avantageuse car la traversée des deux routeurs transversaux supplémentaires est compensée par le fait que les routeurs dans le plan ont une taille petite, en particulier par rapport à la taille des routeurs uniques que présenteraient des unités de routage non dédoublées.

Enfin, lorsque des données sont acheminées entre deux modules fonctionnels de couches différentes dont les routeurs transversaux n'appartiennent pas au même réseau transversal, ces données traversent M+1 routeurs transversaux (M correspondant aux nombre de couches séparant les deux modules fonctionnels), puis N routeurs dans le plan (N correspondant au nombre de modules fonctionnels traversés dans la couche d'arrivée) et enfin un routeur transversal. Si les unités de routages ne comprenaient qu'un unique routeur, les données traverseraient M + N de ces uniques routeurs. Ainsi, dès que M + N est élevé, l'utilisation d'unités de routage dédoublées devient avantageuse car la traversée des deux routeurs transversaux supplémentaires est compensée par le fait que les routeurs dans le plan et les routeurs transversaux ont une taille petite, en particulier par rapport à la taille des routeurs uniques que présenteraient des unités de routage non dédoublées.

On notera par ailleurs que l'invention n'est pas limitée au mode de réalisation décrit précédemment. Il apparaîtra en effet à l'homme de l'art que diverses modifications peuvent être apportées au mode de réalisation décrit ci-dessus, à la lumière de l'enseignement qui vient de lui être divulgué.

En particulier, la puce électronique peut comporter des modules fonctionnels dont l'unité de routage n'est pas dédoublée, c'est-à-dire comportant un unique routeur. En particulier, des unités de routage non dédoublées sont de préférence prévues lorsque le module fonctionnel ne comporte pas de voisins Haut et Bas, ou du moins lorsqu'il n'est pas connecté à ces derniers.

En outre, l'unité de traitement des modules fonctionnels dont l'unité de routage est dédoublée pourrait être connectée au routeur dans le plan à la place du routeur transversal. On obtiendrait ainsi, dans le cas d'un module fonctionnel connecté à tous ses voisins, un routeur dans le plan relié à six connexions de routage (quatre modules fonctionnels voisins dans le plan, unité de traitement et routeur transversal) et un routeur transversal relié à trois connexions de routage (deux modules fonctionnels dans les plans au-dessus et en dessous, routeur dans le plan).

En outre, la géométrie des réseaux de modules fonctionnels dans chaque couche n'est pas limitée à une géométrie en treillis. Par exemple, cette géométrie pourrait être remplacée par l'une des géométries suivantes : en anneau en corde (« chordal ring » en anglais), en arbre élargi (« fat tree » en anglais), en tore (« torus » en anglais) ou bien en tore replié (« folded torus » en anglais). On remarquera que chaque réseau dans le plan de routeurs dans le plan adopterait alors cette géométrie.

Par ailleurs, la puce électronique n'est pas obligatoirement encapsulée dans un boîtier pour former un circuit intégré. En effet, la puce électronique pourrait être directement intégrée dans un circuit électronique tel qu'une carte de circuit imprimée.

Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en œuvre de l'enseignement qui vient de lui être divulgué.

## Revendications

1. Puce électronique comportant des modules fonctionnels (104A - 104I) comprenant chacun une unique unité de traitement (108A - 108I) et une unique unité de routage (110A - 110I) connectées l'une à l'autre, et des connexions (Cx), appelées connexions de routage, présentant chacune au moins une extrémité reliée à l'unité de routage d'un module fonctionnel, les connexions de routage (Cx) connectant entre elles les unités de routage des modules fonctionnels de manière à permettre un routage de données entre les unités de traitement des modules fonctionnels, l'unité de routage (110A, 110C, 110D, 110E, 110F, 110H) d'au moins un module fonctionnel (104A, 104C, 104D, 104E, 104F, 104H), appelée unité de routage dédoublée, comportant deux routeurs (112A, 114A, 112C, 114C, 112D, 114D, 112E, 114E, 112F, 114F, 112H, 114H), appelés respectivement routeur de premier niveau et routeur de second niveau, qui sont connectés l'un à l'autre, l'un ou l'autre des deux étant en outre connecté à l'unité de traitement de ce module fonctionnel à unité de routage dédoublée, **caractérisée en ce que** :
- la puce électronique comporte plusieurs couches (102A, 102B, 102C) de modules fonctionnels,
- le routeur de premier niveau de chaque module fonctionnel à unité de routage dédoublée est en outre relié à au moins deux connexions de routage (Cx) vers au moins deux unités de routage de modules fonctionnels voisins de la même couche que celle de son module fonctionnel à unité de routage dédoublée, et
- le routeur de second niveau de chaque module fonctionnel à unité de routage dédoublée est relié à au moins une autre connexion de routage (Cx) vers au moins une unité de routage de module fonctionnel voisin de couche différente de celle de son module fonctionnel à unité de routage dédoublée.

2. Puce électronique selon la revendication 1, comportant plusieurs modules fonctionnels (104A - 104I) ayant chacun une unité de routage dédoublée (110A - 110I).

3. Puce électronique selon la revendication 2, dans laquelle les routeurs de premier niveau forment au moins un réseau (112A, 112B, 112C ; 112D, 112E ; 112F, 112G, 112H, 112I), appelé réseau de premier niveau, dans lequel les routeurs de premier niveau sont connectés entre eux.

4. Puce électronique selon la revendication 3, dans laquelle les routeurs de premier niveau forment plusieurs réseaux de premier niveau (112A, 112B 112C ; 112D, 112E ; 112F, 112G, 112H, 112I), et comportant au moins une paire d'unités de routage dédoublées (110A, 110D ; 110D, 110F ; 110C, 110E ; 110E, 110H) dont les routeurs de premier niveau appartiennent à des réseaux de premier niveau différents et dont les routeurs de second niveau respectifs sont connectés l'un à l'autre.

5. Puce électronique selon l'une quelconque des revendications 2 à 4, dans laquelle les routeurs de second niveau forment au moins un réseau (114A, 114D, 114F ; 114C, 114E, 114H), appelé réseau de second niveau, dans lequel les routeurs de second niveau sont connectés entre eux.

6. Puce électronique selon l'une quelconque des revendications 1 à 5, dans laquelle chaque couche comporte un réseau de premier niveau distinct (112A, 112B 112C ; 112D, 112E ; 112F, 112G, 112H, 112I).

7. Puce électronique selon l'une quelconque des revendications 1 à 6, comportant au moins une paire d'unités de routage dédoublées (110A, 110D ; 110D, 110F ; 110C, 110E ; 110E, 110H) dont les routeurs de premier niveau appartiennent à des réseaux de premier niveau de couches différentes et dont les routeurs de second niveau respectifs sont connectés l'un à l'autre.

8. Puce électronique selon la revendication 7, dans laquelle chaque réseau de premier niveau (112A, 112B 112C ; 112D, 112E ; 112F, 112G, 112H, 112I) est un réseau en treillis et dans laquelle plusieurs modules fonctionnels (104D, 104E) présentent une unité de routage dédoublée et ont :
- leur routeur de premier niveau (112D, 112E) uniquement connecté à leur routeur de second niveau (114D, 114E) et aux quatre routeurs de premier niveau de quatre modules fonctionnels voisins dans leur couche, et
- leur routeur de second niveau (114D, 114E) uniquement connecté à leur routeur de premier niveau (112D, 112E), à leur unité de traitement (108D, 108E), et aux deux routeurs de second niveau de deux modules fonctionnels voisins, respectivement, de la couche supérieure et de la couche inférieure à leur couche.

9. Circuit intégré (10) comportant un boîtier (12), une puce électronique (14) selon l'une quelconque des revendications 1 à 8 fixée dans le boîtier (12), et des broches de connexion (16) traversant le boîtier (12) et connectées à la puce électronique (14).

## Patentansprüche

1. Elektronischer Chip, der Funktionsbausteine (104A - 104I), die jeder eine einzelne Verarbeitungseinheit (108A - 108I) und eine einzelne Routing-Einheit (110A - 110I) umfassen, welche miteinander verbunden sind, und als Routing-Verbindungen bezeichnete Verbindungen (Cx) umfasst, die jede mindestens ein Ende aufweisen, das an die Routing-Einheit eines Funktionsbausteins angeschlossen ist, wobei die Routing-Verbindungen (Cx) die Routing-Einheiten der Funktionsbausteine miteinander verbunden, um ein Routing von Daten zwischen den Verarbeitungseinheiten der Funktionsbausteine zu ermöglichen, wobei die Routing-Einheit (110A, 110C, 110D, 110E, 110F, 110H) mindestens eines Funktionsbausteins (104A, 104C, 104D, 104E, 104F, 104H), die als duplizierte Routing-Einheit bezeichnet wird, mindestens zwei Router (112A, 114A, 112C, 114C, 112D, 114D, 112E, 114E, 112F, 114F, 112H, 114H) umfasst, welche jeweils als Router erster Stufe und Router zweiter Stufe bezeichnet werden, die miteinander verbunden sind, wobei der eine oder der andere der zwei weiter mit der Verarbeitungseinheit dieses Funktionsbausteins mit duplizierter Routing-Einheit verbunden ist, **dadurch gekennzeichnet, dass**:
- der elektronische Chip mehrere Schichten (102A, 102B, 102C) von Funktionsbausteinen umfasst,
- der Router erster Stufe jedes Funktionsbausteins mit duplizierter Routing-Einheit weiter an mindestens zwei Routing-Verbindungen (Cx) zu mindestens zwei Routing-Einheiten von benachbarten Funktionsbausteinen derselben Schicht wie derjenigen seines Funktionsbausteins mit duplizierter Routing-Einheit angeschlossen ist, und
- der Router zweiter Stufe jedes Funktionsbausteins mit duplizierter Routing-Einheit an mindestens eine andere Routing-Verbindung (Cx) zu mindestens einer Routing-Einheit eines benachbarten Funktionsbausteins einer unterschiedlichen Schicht als derjenigen seines Funktionsbausteins mit duplizierter Routing-Einheit angeschlossen ist.

2. Elektronischer Chip nach Anspruch 1, der mehrere Funktionsbausteine (104A - 104I) umfasst, die jeder eine duplizierte Routing-Einheit (110A - 110I) aufweisen.

3. Elektronischer Chip nach Anspruch 2, wobei die Router erster Stufe mindestens ein als Netz erster Stufe bezeichnetes Netz (112A, 112B, 112C; 112D, 112E; 112F, 112G, 112H, 112I) bilden, in dem die Router erster Stufe miteinander verbunden sind.

4. Elektronischer Chip nach Anspruch 3, wobei die Router erster Stufe mehrere Netze erster Stufe (112A, 112B, 112C; 112D, 112E; 112F, 112G, 112H, 112I) bilden, und mindestens ein Paar duplizierter Routing-Einheiten (110A, 110D; 110D, 110F; 110C, 110E; 110E, 110H) umfassend, von denen die Router erster Stufe zu unterschiedlichen Netzen erster Stufe gehören, und von denen die jeweiligen Router zweiter Stufe miteinander verbunden sind.

5. Elektronischer Chip nach einem der Ansprüche 2 bis 4, wobei die Router zweiter Stufe mindestens ein als Netz zweiter Stufe bezeichnetes Netz (114A, 114D, 114F; 114C, 114E, 114H) bilden, in dem die Router zweiter Stufe miteinander verbunden sind.

6. Elektronischer Chip nach einem der Ansprüche 1 bis 5, wobei jede Schicht ein separates Netz erster Stufe (112A, 112B, 112C; 112D, 112E; 112F, 112G, 112H, 112I) umfasst.

7. Elektronischer Chip nach einem der Ansprüche 1 bis 6, der mindestens ein Paar duplizierter Routing-Einheiten (110A, 110D; 110D, 110F; 110C, 110E; 110E, 110H) umfasst, von denen die Router erster Stufe zu Netzen erster Stufe unterschiedlicher Schichten gehören, und von denen die jeweiligen Router zweiter Stufe miteinander verbunden sind.

8. Elektronischer Chip nach Anspruch 7, wobei es sich bei jedem Netz erster Stufe (112A, 112B, 112C; 112D, 112E; 112F, 112G, 112H, 112I) um ein Gitternetz handelt, und wobei mehrere Funktionsbausteine (104D, 104E) eine duplizierte Routing-Einheit aufweisen und:
- ihren Router erster Stufe (112D, 112E) nur mit ihrem Router zweiter Stufe (114D, 114E) und mit den vier Routern erster Stufe von vier benachbarten Funktionsbausteinen in ihrer Schicht verbunden aufweisen, und
- ihren Router zweiter Stufe (114D, 114E) nur mit ihrem Router erster Stufe (112D, 112E), mit ihrer Verarbeitungseinheit (108D, 108E), und mit den zwei Routern zweiter Stufe von zwei benachbarten Funktionsbausteinen jeweils der Schicht oberhalb und der Schicht unterhalb ihrer Schicht verbunden aufweisen.

9. Integrierte Schaltung (10), die ein Gehäuse (12), einen elektronischen Chip (14) nach einem der Ansprüche 1 bis 8, der im Gehäuse (12) befestigt ist, und Verbindungsstifte (16) umfasst, die durch das Gehäuse (12) hindurchgehen und mit dem elektronischen Chip (14) verbunden sind.

## Claims

1. An electronic chip including functional modules (104A - 1041), each including a single processing unit (108A - 108I) and a single routing unit (110A - 1101) connected to one another, and connections (Cx), called routing connections, each of which has at least one end connected to the routing unit of a functional module, where the routing connections (Cx) connect between themselves the routing units of the functional modules so as to allow a routing of data between the processing units of the functional modules, the routing unit (110A, 110C, 110D, 110E, 110F, 110H) of at least one functional module (104A, 104C, 104D, 104E, 104F, 104H), called a split routing unit, including two routers (112A, 114A, 112C, 114C, 112D, 114D, 112E, 114E, 112F, 114F, 112H, 114H), respectively called the first-level router and the second-level router, which are connected one to the other, wherein any one of the two is moreover connected to the processing unit of this functional module with split routing unit, **characterised in that**:
- the electronic chip includes several layers (102A, 102B, 102C) of functional modules,
- the first-level router of each functional module with split routing unit is moreover linked to at least two routing connections (Cx) towards at least two routing units of neighbouring functional modules of the same layer as that of its functional module with split routing unit, and
- the second-level router of each functional module with split routing unit is linked to at least another routing connection (Cx) towards at least one routing unit of a neighbouring functional module of a layer that is different from that of its functional module with split routing unit.

2. The electronic chip according to claim 1, including several functional modules (104A - 104I), each of which has a split routing unit (110A - 1101).

3. The electronic chip according to claim 2, wherein the first-level routers form at least one network (112A, 112B, 112C; 112D, 112E; 112F, 112G, 112H, 1121), called a first-level network, in which the first-level routers are connected to one another.

4. The electronic chip according to claim 3, wherein the first-level routers form several first-level networks (112A, 112B 112C; 112D, 112E; 112F, 112G, 112H, 1121), and including at least one pair of split routing units (110A, 110D; 110D, 110F; 110C, 110E; 110E, 110H) the first-level routers of which belong to different first-level networks, and the respective second-level routers of which are connected to one another.

5. The electronic chip according to any of claims 2 to 4, wherein the second-level routers form at least one network (114A, 114D, 114F; 114C, 114E, 114H), called a second-level network, in which the second-level routers are connected to one another.

6. The electronic chip according to any of claims 1 to 5, wherein each layer includes a separate first-level network (112A, 112B 112C; 112D, 112E; 112F, 112G, 112H, 1121).

7. The electronic chip according to any of claims 1 to 6, including at least one pair of split routing units (110A, 110D; 110D, 110F; 110C, 110E; 110E, 110H) the first-level routers of which belong to first-level networks of different layers, and the respective second-level routers of which are connected to one another.

8. The electronic chip according to claim 7, wherein each first-level network (112A, 112B 112C; 112D, 112E; 112F, 112G, 112H, 1121) is a lattice network and wherein several functional modules (104D, 104E) have a split routing unit and have:
- their first-level router (112D, 112E) connected only to their second-level router (114D, 114E) and to the four first-level routers of four neighbouring functional modules in their layer, and
- their second-level router (114D, 114E) connected only to their first-level router (112D, 112E), to their processing unit (108D, 108E), and to the two second-level routers of two neighbouring functional modules, respectively, of the layer above and of the layer below their layer.

9. An integrated circuit (10) including a carrier (12), an electronic chip (14) according to any of claims 1 to 8 set in the carrier (12), and connection pins (16) traversing the carrier (12) and connected to the electronic chip (14).
